(19) Europäisches Patentamt
European Patent Office
Office européen des brevets

(11) Publication number: **0 219 322 B1**

(12) **EUROPEAN PATENT SPECIFICATION**

(45) Date of publication of patent specification: **06.03.91**

(51) Int. Cl.5: **C07F 7/18**, C07F 7/04, C08G 77/38

(21) Application number: **86307834.1**

(22) Date of filing: **10.10.86**

(54) **A process for preparation of silyl ketene acetals.**

(30) Priority: **15.10.85 US 787287**

(43) Date of publication of application:
**22.04.87 Bulletin 87/17**

(45) Publication of the grant of the patent:
**06.03.91 Bulletin 91/10**

(84) Designated Contracting States:
**DE FR GB**

(56) References cited:
**EP-A- 0 184 692**

**JOURNAL OF ORGANOMETALLIC CHEMISTRY, vol. 111, 1976, pages 43-60, Elsevier Sequoia S.A., Lausanne, CH; I. OJIMA et al.: "Hydrosilylation of alpha,beta-unsaturated nitriles and esters catalyzed by tris(triphenylphosphine)chlororhodium"**

(73) Proprietor: **DOW CORNING CORPORATION**
**3901 S. Saginaw Road**
**Midland Michigan 48640(US)**

(72) Inventor: **Revis, Anthony**
**2570 Kirk Point Drive**
**Midland Michigan 48640(US)**
Inventor: **Little, Michael Dean**
**5812 Snowberry**
**Midland Michigan 48640(US)**
Inventor: **Dinh, Paul Charles**
**2906 Martin Court**
**Midland Michigan 48640(US)**

(74) Representative: **Laredo, Jack Joseph et al**
**Elkington and Fife Beacon House 113 Kingsway**
**London, WC2B 6PP(GB)**

**EP 0 219 322 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to improved yields from a process for preparing and purifying chemical intermediates known as silyl ketene acetals. More specifically, the silyl ketene acetals are the reaction products of a vinylic compound (methacrylic acid or one of its esters) and a hydrogen-containing silicon material.

To aid in the understanding of the instant invention, the following chemical definitions and notation will be out-lined below. This notation will subsequently be used in the remainder of this specification:

a. Silyl ketene acetal = SKA = 1,4- adduct =

1) 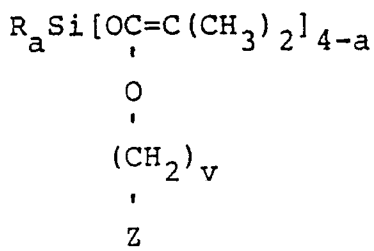 , or

2) 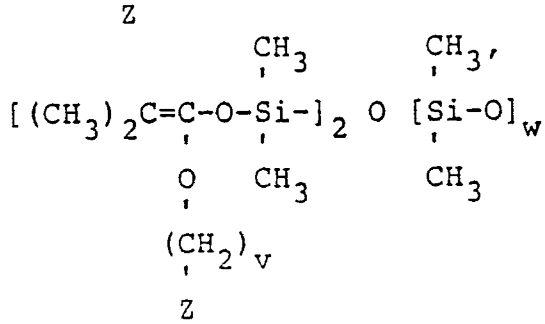 , or

3) 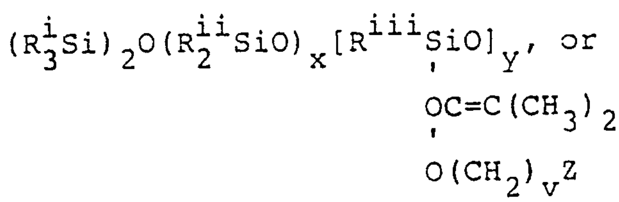 , or

4) 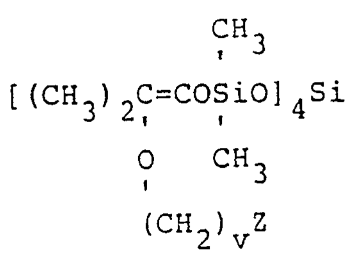 .

b. Vinylic compound = methacrylic acid or an ester of methyacrylic acid

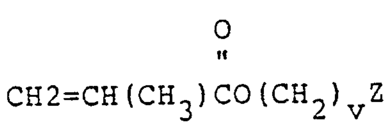

c. Major by-products

* Carbonyl adduct = CA = 1,2- adduct =

1) 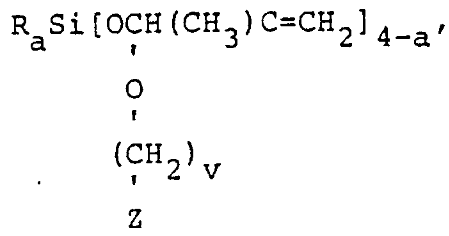 or

2) 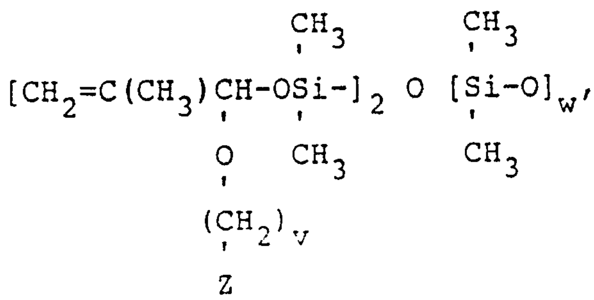 or

3) $(R^{i}_{3}SiO)_2O(R^{ii}_{2}SiO)_x[R^{iii}SiO]_y$, or

$$\quad OCH(CH_3)C{=}CH_2$$
$$\quad O(CH_2)_vZ$$

(pendant on the $R^{iii}Si$ unit)

4) $$[CH_2{=}C(CH_3)CHOSiO]_4Si.$$

with $CH_3$ above and $CH_3$ below the Si, and $O$–$(CH_2)_vZ$ pendant on the $C(CH_3)$ carbon.

* Beta- or vinyl adduct = VA =

1) $$R_aSi\{CH_2CH(CH_3)\overset{O}{\overset{\|}{C}}[O(CH_2)_vZ]\}_{4-a}, \text{ or}$$

2) $$\{[Z(CH_2)_vO]\overset{O}{\overset{\|}{C}}(CH_3)CHCH_2\text{-}Si(CH_3)_2\}_2\ O\ \{Si(CH_3)_2\text{-}O\}_w, \text{ or}$$

3) $(R^{i}_{3}Si)_2O(R^{ii}_{2}SiO)_x\{R^{iii}Si\}_y$, or

$$\quad CH_2CH(CH_3)\overset{O}{\overset{\|}{C}}[OCH_2)_vZ]$$

(pendant on the $R^{iii}Si$ unit)

4) $$[Z(CH_2)_vO\overset{O}{\overset{\|}{C}}(CH_3)CHCH_2Si(CH_3)_2O]_4Si.$$

d. Hydrogen-containing silicon material =

1) $R_aSiH_{4-a}$, or

$$2)\quad \left(H\overset{CH_3}{\underset{CH_3}{Si}}-\right)_2 O \left(\overset{CH_3}{\underset{CH_3}{Si}}\right)_w$$

$$3)\quad (R^{i}_{3}Si)_2O(R^{ii}_{2}SiO)_x(R^{iii}HSiO)_y,$$

$$4)\quad [H\overset{CH_3}{\underset{CH_3}{Si}}O]_4Si.$$

Further details on the chemical structures and notation will be given later in the specification.

The first reference to preparation of silyl ketene acetals was in the late-1950's by Petrov et al., (J. Gen. Chem. (USSR), 29(1959), pp. 2896-2899). This reference and most of the other references to the art deal with the chemical species of the general formula,

$$R_3Si[O\underset{O(CH_2)_vZ}{C}=(CH_3)_2].$$

These reactive organosilane intermediates are of interest because of the ability to further react the SKA's to other intermediates which would be difficult to synthesize by other means. A very recent application is the use of the SKA materials as acrylate polymerization initiators. This concept known as Group Transfer Polymerization (GTP) was developed by DuPont and is disclosed in three recent U.S. patents, U.S. 4,414,372, Farnham et al., issued November 8, 1983; U.S. 4,417,034, Webster, issued November 22, 1983; and U.S. 4,508,880, Webster, issued April 2, 1985.

Silyl ketene acetals, with two silyl ketene acetal moieties, having the general formula,

$$R_2Si[O\underset{O(CH_2)_vZ}{C}=C(CH_3)_2]_2$$

are also disclosed in the art. Kita et al. (Tetrahedron Letters, 24:12 (1983), pp. 1273-1276), disclose the preparation of several ketene acetal materials. Among these SKA materials are the bifunctional compounds,
$\{(CH_3)_2C=C[O(CH_3)]O\}_2Si(CH_3)(CH_3)$,
$\{(CH_3)_2C=C[O(CH_3)]O\}_2Si(C_2H_5)(C_2H_5)$,
$\{(CH_3)_2C=C[O(CH_3)]O\}_2Si(i\text{-}C_3H_7)(i\text{-}C_3H_7)$, and
$\{(CH_3)_2C=C[O(CH_3)]O\}_2Si(CH_3)(C_6H_5)$.
These novel SKA reagents have been shown to be very useful as bifunctional protecting agents for H-acidic materials such as diols, dithiols, diacids, and the like.

Three procedures for preparing silyl ketene acetals from carboxylic acid esters are known in the art. The first general route to SKA's is the reaction of a carboxylic acid ester with an appropriate metal reagent to form a metal enolate ion and subsequent reaction of the enolate ion with an organochlorosilane. Ainsworth et al., J. Organometallic Chem., 46(1972), pp. 59-71 described the preparation of an SKA via the reaction of carboxylic acid esters with lithium diisopropylamide, followed by reaction with trimethylchlorosilane. Kita et al., in the above cited reference, disclose a similar procedure to prepare the bifunctional SKA's. Brown J.Org. Chem., 39:9(1974), pp. 1324-1325, describes the preparation of metal enolate ions by reacting potassium hydride in tetrahydrofuran with a carbonyl compound, followed by reaction with excess triethylamine and trimethylchlorosilane.

In a second general procedure silyl ketene acetals are prepared by the hydrosilation reaction of carboxylic acid esters and organohydrosilanes. Petrov et al., J. Gen. Chem. (USSR), 29(1959), pp. 2896-2899, described the platinum-catalyzed reaction of methylmethacrylate with triethylsilane; the product was mainly the beta or vinyl adduct VA rather than the desired SKA. Ojima et al., J. Organometallic Chem., 111-(1976), pp. 43-60, studied the use of tris(triphenylphosphine)rhodium chloride as a catalyst; methacrylate esters and triethylsilane formed mainly the desired SKA with some carbonyl adduct CA. Ojima et al. include an example in which a crude reaction product is determined to be 92% SKA and 8% CA by gas chromatographic analysis. Ojima et al. make no disclosure of separation and recovery of SKA essentially free of CA.

Howe et al., J. Organometallic Chem., 208(1981), pp. 401-406 and Yoshii et al., Chem. Pharm. Bull., 22-(1974), pp. 2767-2769, describe yields of 70-75% SKA from the reaction of $(C_2H_5)_3SiH$ and methylmethacrylate using organophosphorous complexes of rhodium as a catalyst. Howe determined yield by use of gas chromatographic analyses. Nowhere does Howe et al. mention the carbonyl adduct or physical separation and isolation of the desired SKA material. Yoshii et al. indicate that the SKA produced above was recovered by "short-path distillation." In the instant invention, it was unexpectedly found that for methacrylate materials the carbonyl adduct CA was formed along with the desired SKA and that separation of the SKA from CA was not possible by conventional distillation. The very close boiling points of the SKA and CA (estimated as a difference of less than 5° C. by gas chromatographic and mass spectroscopic work) would seem to bear out this finding. Further, during the development of the instant invention, it was unexpectedly found that the use of gas chromatography to analyze for the SKA and CA components in the crude reaction mixture was in itself difficult. The early attempts at gas chromatography resulted in identification of SKA and CA as a single compound. A special gas chromatographic technique was required to effect resolution of the SKA and CA peaks to facilitate identification. This analytical difficulty may further explain the apparent contradiction between the teachings of Yoshii et al. and the instant invention. Yoshii et al. may have recovered SKA and CA together and may have identified this mixture as SKA.

In a third procedure, Ishikawa et al. in U.S. 4,482,729, issued November 13, 1984, describe the preparation of a fluoroalkyl silyl ketene acetal by the reaction of a fluorinated carboxylic acid ester with trimethylsilyl trifluoromethanesulfonate.

EP-A-184 692 describe O-silylated ketene acetals or enol ethers consisting essentially of:

(a) O-aminosilylated ketene acetals and enol ethers of the general formula:

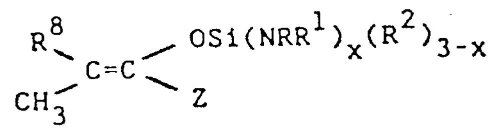

(b) O-siloxanesilylated ketene acetals and enol ethers of the general formulae:

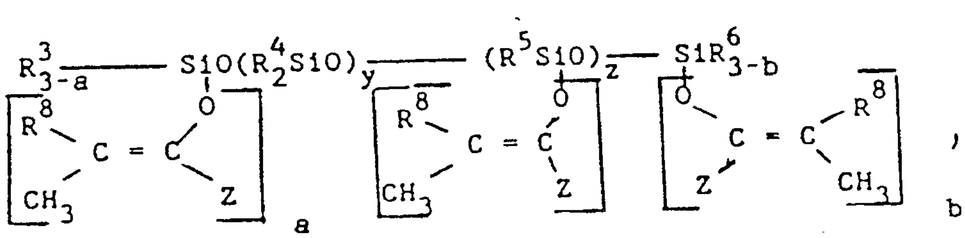

(c) O-alkoxysilylated ketene acetals and enol ethers of the general formula:

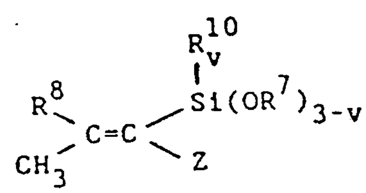

wherein R, $R^1$ and $R^2$ are individually alkyl or aryl group containing 1 to 8 carbon atoms and R can be hydrogen; $R^3$, $R^4$, $R^5$, $R^6$, $R^7$, and $R^{10}$ are individually alkyl groups containing 1 to 8 carbon atoms; $R^8$ is hydrogen or an alky1 or ary1 groups having 1 to 8 carbon atoms; Z is selected from hydrogen, an alkyl group, an aryl group, an alkoxy group and an aryloxy group containing from 1 to 15 carbon atoms and a is

0 or 1, b 0 or 1, y has a value from 1 to 500, z has a value from 0 to 499, and, the sum of y + z equals from 1 to 500 with the proviso that if z is 0, a + b must equal at least 1; x is 1, 2 or 3; and v is 0, 1 or 2.

These products are prepared by a process which comprises l,4-hydrosilation of a hydrosilation composition selected from

(a) aminosilanes of the formula:

$$H\text{-}Si(NRR^1)_x(R^2)_{3-x};$$

(b) siloxanes of the formula:

$$R^3_{3-a}(H)_aSiO(R^4_2SiO)_y(R^5\overset{H}{Si}O)_zSi(H)_bR^6_{3-b};$$

and

(c) alkoxysilanes of the formula:

$$H\text{-}\overset{R^{10}_v}{Si}(OR^7)_{3-v}.$$

with an a,$\beta$-unsaturated carbonyl compound of the formula:

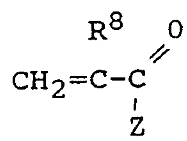

in the presence of a rhodium catalyst.

Preparation of silyl ketene acetals via the metal enolate ion route has several shortcomings compared to the instant invention. First there is the cost of the necessary reactants, namely, lithium diisopropylamide, potassium hydride, solvents, etc. Additionally, the resultant metal salts formed during the reaction pose a difficult processing step. In combination, the two above shortcomings result in potentially higher costs to produce the final product.

In regard to the art on use of rhodium catalysts, the references cited teach the use of organophosphorous complexes of rhodium. The instant invention has found unexpectedly that $RhCl_3.3H_2O$, an inexpensive, more readily available material, is an improved catalyst compared to the cited organophosphorous complexes of rhodium. Significantly, it has been found that $RhCl_3.3H_2O$ will give the desired results, that is, reactivity and selectivity with some methacrylate esters, where the organophosphorous complexes will not. most significantly, it has also been unexpectedly found that $RhCl_3.3H_2O$ increases yields of the desired silyl ketene acetal in the crude reaction mixture by as much as 50 percent or more, as compared to comparable levels of organorhodium complexes.

A further unexpected result of the instant invention was the finding that rhodium catalyst concentration has a significant impact upon the selectivity toward the desired silyl ketene acetal. An additional unexpected result is the finding that the carbonyl adduct (CA), which boiled very closely to the desired SKA, could be reacted to higher-boiling chemical species by reaction with an excess of the hydrogen-containing silicon material. This finding allowed the use of conventional separation techniques such as distillation to facilitate what is an extremely difficult separation and enhances the recovery of very high-purity SKA.

One example of the utility of reacting the carbonyl adduct (CA) to higher-boiling chemical species to facilitate recovery of high-purity silyl ketene acetal SKA via distillation is included in the examples. A further example of the utility of this finding in facilitating the separation and isolation of desired SKA materials is included in another U.S. patent application filed concurrently with the instant application. The application in reference, which was filed on behalf of William X. Bajzer and Anthony Revis and is entitled PREPARATION

OF HIGH-PURITY SILYL KETENE ACETALS, was filed on even date herewith.

The objective of the instant invention is to provide a process for the preparation and recovery of silyl ketene acetals; said process 1) provides for higher yields of the desired SKA in the crude reaction product , 2) maximizes conversion of raw materials to the desired SKA, 3) provides a purification and recovery scheme to yield high-purity final SKA product, 4) minimizes complexity of processing, and 5) minimizes the final cost of the desired SKA product.

In accordance with the instant invention, there is provided a process for the manufacture of increased yields of high-purity silyl ketene acetal material of the general formula selected from the group consisting essentially of

(I) 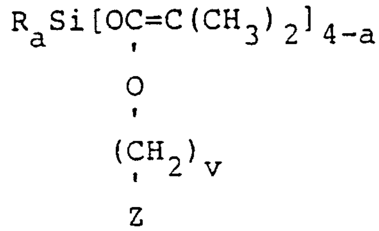 ;

(II) 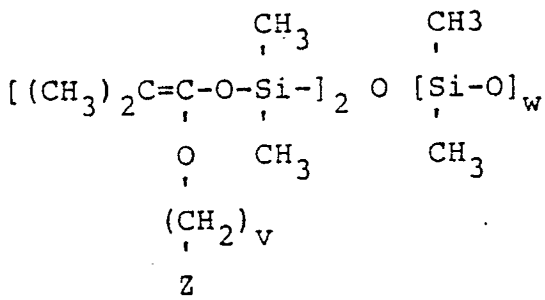 ;

(III) 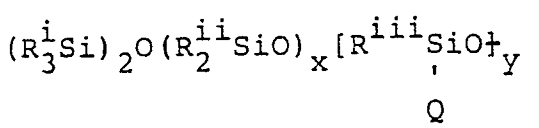 ; and

(IV) 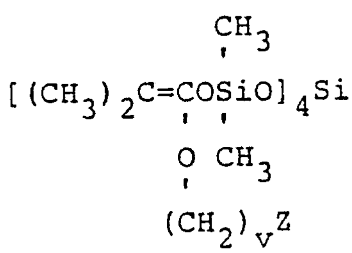 ,

wherein R is selected from the group consisting of alkyl radicals containing 1 to 4 carbon atoms, aryl groups, and alkoxy groups containing 1 to 4 carbon atoms;

a has a value of 0, 1, 2, or 3;

v in each case has a value of 0, 1, 2 or 3;

w has a value of 0 to 25;

x has a value of 0 to 100;

y has a value of 1 to 35;

Q is 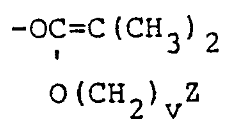 ;

$R^i$, $R^{ii}$, and $R^{iii}$ are each independently selected from the group consisting of alkyl groups containing 1 to

4 carbon atoms and aryl groups; Z in each case is independently selected from the group consisting of
(i) -H,
(ii) -OH,
(iii) $-SiR^{iv}R^{v}R^{vi}$,
wherein $R^{iv}$, $R^{v}$, and $R^{vi}$ are independently selected from the group consisting of alkyl radicals containing 1 to 4 carbon atoms, aryl groups, and alkoxy groups containing 1 to 4 carbon atoms,
(iv) $-OSiR^{iv}R^{v}R^{vi}$,
(v) $-CH(CH_3)_2$,
(vi)

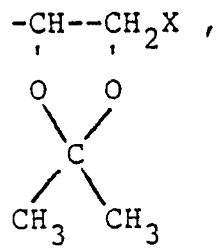

wherein X is hydrogen or $-(CH_2)_{0-5}(CH_3)$,
(vii) $-(CH_2)_bOCH(CH_3)O(CH_2)_cCH_3$,
wherein b and c each have a value of 1 to 4,
(viii)

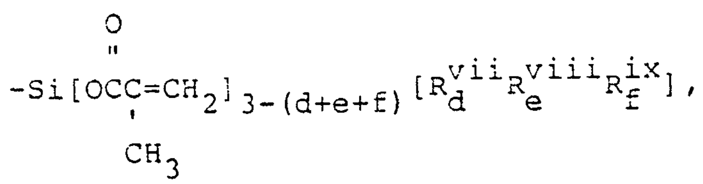

wherein $R^{vii}$, $R^{viii}$, and $R^{ix}$ are independently selected from and have the same definition as $R^{iv}$, $R^{v}$, and $R^{vi}$; and wherein d, e, and f each have a value of 0 or 1,
(ix) $-NR^{x}R^{xi}$,
wherein $R^{X}$ and $R^{Xi}$ are independently selected from and have the same definition as $R^{iv}$, $R^{V}$, and $R^{vi}$,
(x) -Y,
wherein Y is independently selected from a group consisting of $C_{1-20}$ alkyl, alkenyl, or alkadienyl; $C_{6-20}$ cycloalkyl, aryl, alkaryl, or aralkyl; any of said groups containing one or more ether oxygen atoms within aliphatic segments thereof; and any of such groups containing one or more functional substituents that are unreactive under polymerizing conditions,
(xi) -N=C=O,

the process comprising the reaction of a vinylic compound with a hydrogen-containing silicon material under certain conditions as will be delineated herein. What is described, therefore, is a process to facilitate recovery of a high-purity silyl ketene acetal, said process comprising (A) contacting (I), a vinylic compound selected from the group consisting of [i] methacrylic acid and [ii] an ester of methacrylic acid of the general chemical formula,

$$CH_2{=}C(CH_3)\overset{\overset{O}{\|}}{C}O(CH_2)_V Z,$$

wherein, V and Z are defined above, with a hydrogen-containing silicon material having the general formulae,

(V) $R_aSiH_{4-a}$;

(VI) $(HSi(CH_3)_2-)_2O(Si(CH_3)_2O)_w$;

(VII) $(R^i_3Si)_2O(R^{ii}_2SiO)_x(R^{iii}HSiO)_y$; and

(VIII) $[HSi(CH_3)_2O]_4Si$,

wherein, $R^i$, $R^{ii}$, $R^{iii}$, a, w, x, and y have the meanings defined above, in the presence of a rhodium compound containing only inorganic ligands; (B) separating and isolating the desired product from the reaction mixture.

As described above, the catalyst is a rhodium compound containing only inorganic ligands, namely $RhCl_3.3H_2O$ rhodium concentration relative to the vinylic compound should be at least 50 ppm on a molar basis. As will be described in the examples, the concentration of the rhodium catalyst is a critical factor in maximizing rate of reaction and silyl ketene acetal content of the resultant crude product.

The temperature during reaction of the hydrogen-containing silicon material and the vinylic compound is maintained in a range of 30°C to 80°C. The lower temperature is a minimum to ensure that sufficient rate of reaction is achieved. The upper temperature is specified to minimize the polymerization of the vinylic compound.

The pressure in the reaction zone during the reaction of the hydrogen-containing silicon material and the vinylic compound is at least atmospheric pressure. As will be shown in the examples, pressures up to and including 200 psig do not have a negative effect upon the reaction of the instant invention.

The hydrogen-containing silicon material and the vinylic compound are contacted in the presence of the rhodium catalyst at reaction conditions for a period of time of at least one hour.

Additionally, a molar excess of the hydrogen-containing silicon material of at least 12% relative to the vinylic compound is needed to ensure conversion of the very close-boiling carbonyl adduct.

As will be noted in the examples, conversion of the carbonyl adduct to higher-boiling materials with an excess of the hydrogen-containing silicon material facilitates recovery of product that is greater than 95 weight percent silyl ketene acetal, with less than 1 weight percent of the carbonyl adduct as an impurity. Conventional distillation column design can be specified to provide the capabilities to recover silyl ketene acetal at greater than 95 weight percent purity.

The hydrogen-containing silicon material may be of the general formula, $R_aSiH_{4-a}$. Hydrogen-containing silicon materials having this general formula include, for example, $(CH_3)_3SiH$, $(CH_3)_2SiH_2$, $CH_3SiH_3$, $SiH_4$, and the like.

The hydrogen-containing silicon material may also have the general formula,

$$(HSi(CH_3)_2-]_2O(Si(CH_3)_2)_w.$$

Hydrogen-containing silicon compounds having this general formula include, for example $[(CH_3)_2HSi]_2O$, $[-(CH_3)_2HSiO]_2[(CH_3)_2SiO]_{1-25}$, and the like.

The hydrogen-containing silicon material may further have the general formula,

$(R^{i}_{3}Si)_2O(R^{ii}_{2}SiO)_x(R^{iii}HSiO)_y$.
Hydrogen-containing silicon compounds having this general formula include, for example, $(CH_3)_3SiO$-$[CH_3HSiO]Si(CH_3)_3$, $[(CH_3)_3SiO]$ $[CH_3)_2SiO]$ $[CH_3HSiO]$ $[Si(CH_3)_3]$, $[(CH_3)_3SiO]$ $[CH_3HSiO]_{2\text{-}35}[Si(CH_3)_3]$, $[(CH_3)_3SiO]$ $[(CH_3)_2SiO]_{2\text{-}100}[CH_3HSiO]_{2\text{-}35}[Si(CH_3)_3]$, and the like.

The silyl ketene acetal may have the formula,

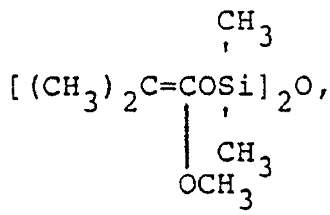 or

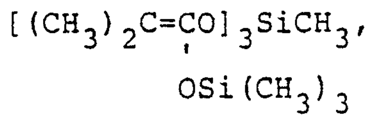 or

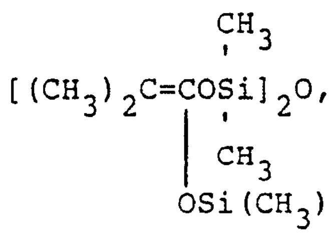 or

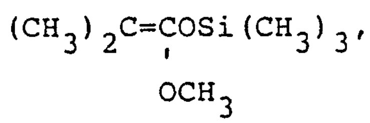 or

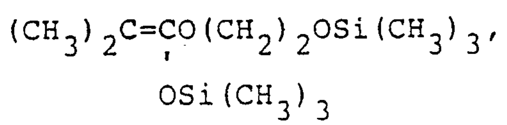 or

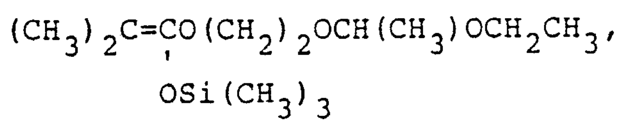 or

$(CH_3)_2C=C[OSi(CH_3)_3]_2$, or

$$(CH_3)_3SiO[CH_3\underset{|}{Si}O]_{30}Si(CH_3)_3,$$
$$OC=C(CH_3)_2$$
$$OCH_3$$

$$(CH_3)_3SiO[CH_3\underset{|}{Si}O]_{30}Si(CH_3)_3,$$
$$OC=C(CH_3)_2$$
$$OSi(CH_3)_3$$

$$(CH_3)_3SiO[CH_3\underset{|}{Si}O]_{10}Si(CH_3)_3,$$
$$OC=C(CH_3)_2$$
$$OCH_3$$

$$(CH_3)_3SiO[CH_3\underset{|}{Si}O]_{10}Si(CH_3)_3,$$
$$OC=C(CH_3)_2$$
$$OSi(CH_3)_3$$

$$(CH_3)_3SiO[CH_3\underset{|}{Si}O]_3Si(CH_3)_3,$$
$$OC=C(CH_3)_2$$
$$OCH_3$$

$$(CH_3)_3SiO[CH_3\underset{|}{Si}O]_3Si(CH_3)_3,\text{ or the like.}$$
$$OC=C(CH_3)_2$$
$$OSi(CH_3)_3$$

The silyl ketene acetal may further have the general formula,

$$[(CH_3)_3Si]_2O[(CH_3)_2SiO]_x[CH_3\underset{|}{Si}O]_y,$$
$$Q$$

wherein Q is defined as being

$$-OC(=C(CH_3)_2)OCH_3 \quad \text{or}$$

$$-OC(=C(CH_3)_2)OSi(CH_3)_3.$$

Silyl ketene acetals having this general formula can be

$$(CH_3)_3SiO[CH_3SiO]Si(CH_3)_3, \text{ or}$$
$$OC(=C(CH_3)_2)OCH_3$$

$$(CH_3)_3SiO[CH_3SiO]Si(CH_3)_3, \text{ or}$$
$$OC(=C(CH_3)_2)OSi(CH_3)_3$$

$(CH_3)_3SiO[(CH_3)_2SiO][CH_3SiO]Si(CH_3)_3$, or

$OC=C(CH_3)_2$

$OCH_3$

$(CH_3)_3SiO[(CH_3)_2SiO][CH_3SiO]Si(CH_3)_3$, or

$OC=C(CH_3)_2$

$OSi(CH_3)_3$

$(CH_3)_3SiO[(CH_3)_2SiO]_{2-100}[CH_3SiO]_{2-35}Si(CH_3)_3$, or

$OC=C(CH_3)_2$

$OCH_3$

$(CH_3)_3SiO[(CH_3)_2SiO]_{2-100}[CH_3SiO]_{2-35}Si(CH_3)_3$, or

$OC=C(CH_3)_2$

$OSi(CH_3)_3$

$(CH_3)_3SiO[CH_3SiO]_{2-35}Si(CH_3)_3$, or

$OC=C(CH_3)_2$

$OCH_3$

$(CH_3)_3SiO[CH_3SiO]_{2-35}Si(CH_3)_3$, and the like.

$OC=C(CH_3)_2$

$OSi(CH_3)_3$

The preferred mode for carrying out the instant invention is to add the hydrogen-containing silicon material to a mixture of the vinylic compound and a solvent solution of $RhCl_3.3H_2O$. The rhodium concentration should be between 50 and 3000 ppm on a molar basis relative to the vinylic compound. More preferably, the rhodium concentration should be between 200 and 3000 ppm.

The hydrogen-containing silicon material should be added at such a rate that the reaction temperature is maintained preferably between 40° and 60° C.

The reaction is preferably operated at atmospheric pressure.

Excess of the hydrogen-containing silicon material fed to the reaction mixture is preferably 12 to 25 mole percent relative to the vinylic compound.

Distillation conditions are maintained so that processing temperatures are kept as low as possible to minimize degradation of the desired SKA. Specification of the distillation column (theoretical trays, etc.,) is known in the art and should be set to maintain a silyl ketene acetal purity of greater than 95 weight percent, with less than 1 weight percent byproduct CA as an impurity.

So that those skilled in the art can better appreciate and understand the instant invention, the following examples are given. These examples are presented to be illustrative and are not to be construed as limiting the instant invention as delineated in the claims.

Example 1

Two series of runs were made to compare the effectiveness of an organo complex of rhodium with a rhodium compound with inorganic ligands, as a catalyst for the reaction of methylmethacrylate (MMA) and $(CH_3)_3SiH$ to produce the desired silyl ketene acetal (SKA) or 1,4-adduct,
$(CH_3)_2C=C(OCH_3)$ $[OSi(CH_3)_3]$.
The following general procedures were used for all the runs utilizing an organo complex of rhodium as a catalyst:

2527 grams (25.2 moles) of MMA, 4.67 grams (0.005 moles) tris(triphenylphosphine)rhodium chloride, and 0.25 gram of methoxyhydroquinone were charged to a 2-gallon(9 litres) pressure reactor with agitator. The rhodium catalyst charge was varied to vary the catalyst concentration. The reactor was pressurized with nitrogen gas which contained 2 volume percent oxygen. Reactor pressure was maintained with this gas mixture. The reactor was pressurized to 80 to 200 psig. (552 to 1379 k Pa gauge) Temperature was controlled by a cooling/heating coil in the reactor. Reactor temperature was further controlled by the addition rate of $(CH_3)_3SiH$.

$(CH_3)_3SiH$ was fed as a liquid to the reactor via a proportioning pump through a dip pipe. A total of 3513 milliliters (2241 grams or 30.3 moles) of $(CH_3)_3SiH$ were fed to the reactor over a period of approximately 2 to 3 hours. Post-heating at temperature after $(CH_3)_3SiH$ addition was approximately 4 to 5 hours. Reaction temperature was controlled by the rate of addition of $(CH_3)_3SiH$ and cooling of the reactor.

The results of gas chromatographic analyses of crude product samples for this series of runs are tabulated below. These crude product samples are designated as Samples A, B, C, D, E, and F, respectively. Catalyst concentration (Rh) is expressed as ppm in MMA on a molar basis. Temperature is expressed in °C. Crude product analysis is expressed as weight percent MMA, SKA, and the carbonyl or 1,2-adduct (CA), the vinyl adduct (VA), and other by-products, where
$CH_2=C(CH_3)CH(OCH_3)$ $[OSi(CH_3)_3]$ = CA
$(CH_3)_3SiCH_2C(CH_3)COOCH_3$ = VA.
Results are tabulated as Table 1:

Table 1

(Not Within Scope of the Instant Invention)

| Sample | Rh | Temp | MMA | SKA | CA | VA | Other |
|---|---|---|---|---|---|---|---|
| A | 200 | 40 | 2.2 | 54.1 | 6.8 | 7.6 | 29.3 |
| B | 200 | 50 | 4.2 | 47.8 | 6.0 | 11.5 | 30.5 |
| C | 200 | 55 | 0 | 41.3 | 2.3 | 11.5 | 44.9 |
| D | 400 | 40 | 0.5 | 74.3 | 4.8 | 1.6 | 18.8 |
| E | 400 | 45 | 5.3 | 80.5 | 10.4 | 0.4 | 3.4 |
| F | 400 | 55 | 2.3 | 63.5 | 6.2 | 1.3 | 29.0 |

A second series of runs was made using $RhCl_3.3H_2O$ as the catalyst for the reaction of methylmethacrylate (MMA) with $(CH_3)_3SiH$ to produce the desiredSKA as above. $RhCl_3.3H_2O$ is not soluble in MMA. Therefore, the $RhCl_3.3H_2O$ was dissolved in acetone (1 part $RhCl_3.3H_2O$ per 40 parts acetone). The $RhCl_3.3H_2O$ was introduced to the reactor as a solution. All runs in this series followed the general procedure given below:

200 grams (2 moles) of MMA and 0.2 grams of methoxyhydroquinone were charged to an agitated reactor with heating and cooling capabilities. $RhCl_3.3H_2O$ was added to the reactor as an acetone solution (1 part $RhCl_3.3H_2O$ per 40 parts of acetone). 2.4 grams of this solution or 0.06 grams ($2.2x10^{-4}$ moles of $RhCl_3.3H_2O$) were charged to the reactor. The reactor and contents were heated to the desired reaction temperature (45-75°C.). The reactor also had cooling capability. During the course of the reaction, the system was at essentially atmospheric pressure. Additionally, the reactor was continuously purged with nitrogen gas which contained 2 volume percent oxygen.

$(CH_3)_3SiH$ was stored as a liquid and fed to the reactor as a gas. 149 grams (2 moles) of $(CH_3)_3SiH$ were fed to the reactor over a period of 2 to 4 hours to maintain the reaction temperature. Crude product samples were taken and analyzed via gas chromatography. These samples are designated Sample G, H, I, J, K, L, M, N, and O, respectively.

Results are again tabulated below to show the effect of rhodium catalyst concentration and reaction temperature upon crude product composition. These results are summarized, with the same notation as described above, as Table 2:

Table 2

| Sample | Rh | Temp | MMA | SKA | CA | VA | Other |
|---|---|---|---|---|---|---|---|
| G | 50 | 55 | 43.8 | 44.6 | 5.2 | 0.7 | 6.3 |
| H | 50 | 65 | 44.7 | 46.4 | 5.6 | 0.4 | 2.9 |
| I | 50 | 75 | 33.9 | 52.4 | 6.8 | 0.2 | 6.7 |
| J | 100 | 50 | 32.0 | 56.0 | 6.9 | 0.1 | 5.0 |
| K | 100 | 60 | 12.3 | 68.2 | 6.9 | 1.2 | 11.4 |
| L | 100 | 70 | 24.8 | 62.8 | 7.1 | 1.3 | 4.0 |
| M | 200 | 45 | 0.4 | 86.0 | 9.8 | 0.8 | 3.0 |
| N | 200 | 55 | 0.4 | 84.1 | 9.9 | 0 | 5.6 |
| O | 200 | 65 | 5.2 | 81.1 | 11.2 | 0.4 | 2.1 |

These results demonstrate that $RhCl_3.3H_2O$ is a more efficient catalyst than tris(triphenylphosphine)-rhodium in preparing the desired SKA. Comparison of results illustrates the following advantages of $RhCl_3.3H_2O$ over tris(triphenylphosphine)rhodium chloride: 1) increased levels of SKA of 50% or more in crude reaction product at comparable rhodium catalyst levels; 2) lower levels of VA and other byproducts at comparable SKA levels, particularly at lower rhodium catalyst levels.

The above results also demonstrate that the reaction of MMA and $(CH_3)_3SiH$ to produce the desired silyl ketene acetal is improved by higher levels of $RhCl_3.3H_2O$.

These results also demonstrate that the reaction proceeds at atmospheric pressure.

Example 2

A run was made to study the progress of the rhodium-catalyzed reaction of $(CH_3)_3SiH$ and methylmethacrylate (MMA) to produce the desired silyl ketene acetal. Crude product composition was tracked as a function of $(CH_3)_3SiH$ addition.

200 grams (2 moles) of MMA were charged to an agitated reactor. $RhCl_3.3H_2O$ was added to the reactor as an acetone solution (1 part $RhCl_3.3H_2O$ per 40 parts of acetone). 2.4 grams of solution or 0.06 grams ($2.2x10^{-4}$ moles) $RhCl_3.3H_2O$ were also added to the reactor. The run was made essentially at atmospheric pressure. The reactor was continuously purged with nitrogen gas which oontained 2 volume percent oxygen. The reactor had both heating and cooling capabilities. The reactor was heated to 55° C., and that temperature was maintained throughout the course of the reaction.

$(CH_3)_3SiH$ was stored as a liquid and fed to the reactor as a gas. A total of 169 grams (2.28 moles) of $(CH_3)_3SiH$ was fed to the reactor. Samples of reaction crude were taken during the course of the $(CH_3)_3SiH$ addition. These samples are designated as Samples A, B, C, D, E, F, and G, respectively.

Table 3 is a summary of this sampling and subsequent analyses. Each sample is identified by the time after start of $(CH_3)_3SiH$ addition, mole percent (% $(CH_3)_3Si$) of the stoichiometric $(CH_3)_3SiH$ fed, and the crude product analysis.

Product analyses were effected by gas chromatography. The analyses are reported as weight percent (%) unreacted MMA and the silyl ketene acetal product and its major byproduct (abbreviated notation as described in Example 1).

Table 3

| Sample | Time,hr | %$(CH_3)_3SiH$ | MMA | SKA | CA |
|---|---|---|---|---|---|
| A | 1.0 | 26 | 60.7 | 35.7 | 6.7 |
| B | 2.0 | 54 | 31.2 | 58.4 | 7.6 |
| C | 3.0 | 78 | 13.7 | 77.5 | 10.3 |
| D | 4.1 | 101 | 0.1 | 84.1 | 9.9 |
| E | 4.7 | 106 | 0 | 86.4 | 6.1 |
| F | 5.2 | 110 | 0 | 80.4 | 2.6 |
| G | 5.8 | 114 | 0 | 82.7 | 1.3 |

The above results demonstrate the reduction of CA in the crude product by addition of excess $(CH_3)_3SiH$. The results would indicate that an excess of at least 12 mole percent of $(CH_3)_3SiH$, relative to MMA, is needed to react with the carbonyl adduct (CA) to facilitate later recovery of the desired silyl ketene acetal.

Example 3

A second run was made similarly to the run in Example 2 in which the $RhCl_3.3H_2O$ catalyzed reaction of $(CH_3)_3SiH$ and methylmethacrylate (MMA) was tracked as a function of $(CH_3)_3SiH$ addition. However, this particular run was carried out at a pressure of 100 psig(6895 k Pa gauge).These results will be compared to those of Example 2.

75 grams (0.75 moles) of MMA were charged to an agitated reactor. 0.044 grams ($1.7x10^{-4}$ moles) $RhCl_3.3H_2O$ dissolved in 1.3 grams acetone were also added to the reactor. The reactor was pressurized to 100 psig(6895k Pa gauge)with a mixture of 2 mole percent oxygen in nitrogen gas. The reactor was heated to 55° C., and that temperature was maintained throughout the course of the reaction.

$(CH_3)_3SiH$ was added to the reactor as a liquid. A total of 66 grams (0.89 moles) of $(CH_3)_3SiH$ was fed to the reactor. Samples of reaction crude were taken during the course of the $(CH_3)_3SiH$ addition. These samples are designated Sample H, I, and J, respectively.

Table 4 is a summary of this sampling and subsequent analyses by gas chromatography. Each sample is identified by the time after start of the $(CH_3)_3SiH$ addition, mole percent [% $(CH_3)_3SiH$] of stoichiometric $(CH_3)_3SiH$ fed, and the subsequent crude product analysis. The analyses are reported using the notation of Example 2.

Table 4

| Sample | Time,hr | %$(CH_3)_3SiH$ | MMA | SKA | CA |
|---|---|---|---|---|---|
| H | 4.5 | 100 | 0.3 | 79.7 | 9.9 |
| I | 5.5 | 106 | 0 | 76.6 | 6.0 |
| J | 6.5 | 117 | 0 | 75.2 | 0.1 |

Comparable results from Example 2 are shown in Table 5.

Table 5

| Sample | Time,hr | %$(CH_3)_3SiH$ | MMA | SKA | CA |
|---|---|---|---|---|---|
| D | 4.1 | 101 | 0.1 | 84.1 | 9.9 |
| E | 4.7 | 106 | 0 | 86.4 | 6.1 |
| G | 5.8 | 114 | 0 | 82.7 | 1.3 |

The above results demonstrate that pressure has little effect upon the course of the reaction to form the desired SKA and subsequent reaction of CA to higher-boiling byproducts.

Example 4

Two runs were made to produce a crude silyl ketene acetal from the reaction of $(CH_3)_3SiH$ and 4-methyl-3,5-dioxy heptylmethacrylate,
$CH_2=C(CH_3)COOCH_2CH_2OCH(CH_3)OCH_2CH_3$.

In the first run, 1 gram (0.005 moles) of 4-methyl-3,5-dioxyheptyl methacrylate, greater than 1 gram (greater than 0.005 moles) of $(CH_3)_3SiH$, and approximately 0.005 grams ($5x10^{-6}$ moles) of tris-(triphenylphosphine)rhodium chloride are charged to a sealed, agitated reactor. The reaction was allowed to proceed at ambient temperature. Samples were taken periodically and analyzed by gas chromatography. these samples were designated Samples A, B, C, and D, respectively.

Table 6 is a summary of the above analyses as a function of reaction time. Analysis of SKA, CA, and other byproducts are reported in weight percent.

Table 6

(Not Within the Scope of the Instant Invention)

| Sample | Time,hr | %SKA | %CA | %Other |
|---|---|---|---|---|
| A | 0 | 0 | 0 | 0 |
| B | 4 | 7.1 | 0 | 4.5 |
| C | 24 | 22.7 | 0 | 26.8 |
| D | 39 | 18.3 | 0 | 81.7 |

The second run was carried out with essentially the same procedure with the exception that 0.0015 grams ($5.7x10^{-6}$ moles) $RhCl_3.3H_2O$ was used as a catalyst in lieu of the tris(triphenylphosphine)rhodium chloride. The reaction mixture was similarly sampled and analyzed by gas chromatography. These samples are designated as Samples E and F, respectively. The results of the second run are reported, as above, in Table 7:

Table 7

| Sample | Time,hr | %SKA | %CA | %Other |
|---|---|---|---|---|
| E | 0 | 0 | 0 | 0 |
| F | 4 | 77.1 | 0 | 22.8 |

The above results demonstrate the preparation of a silyl ketene acetal from another ester of methacrylic acid. These results also demonstrate that $RhCl_3.3H_2O$ is a much more effective catalyst for the preparation of the desired SKA than is tris(triphenylphosphine)rhodium chloride.

Example 5

Three runs were made to prepare a crude silyl ketene acetal from the reaction of $(CH_3)_3SiH$ and an ester of methacrylic acid with the chemical formula,
$CH_2=C(CH_3)COOCH_2CH_2OSi(CH_3)_3$ = HEMA.

The first two runs used $RhCl_3.3H_2O$ as a catalyst, and the third run used tris(triphenylphosphine)-rhodium chloride as a catalyst.

1 gram (0.005 moles) HEMA, approximately 0.6 grams (0.008 moles) of $(CH_3)_3SiH$, and 0.004 grams (1.5x10-5 moles) of $RhCl_3.3H_2O$ were charged to a sealed, agitated reactor. The reaction was allowed to proceed at ambient temperature, and samples were taken periodically to be analyzed by gas chromatography. These samples are designated Samples A and B, respectively. The results of these analyses are reported in weight percent (%) unreacted HEMA, desired silyl ketene acetal (SKA),
$(CH_3)_2C=C[OSi(CH_3)_3]$ $[OCH_2CH_2OSi(CH_3)_3]$,
the carbonyl adduct (CA),
$CH_2=C(CH_3)CH[OSi(OCH_3)_3]$ $[OCH_2CH_2OSi(CH_3)_3]$, and other byproducts. Table 8 is a summary of these analyses as a function of reaction time:

Table 8

| Sample | Time,hr | %HEMA | %SKA | %CA | %Other |
|---|---|---|---|---|---|
| A | 0.5 | 0 | 85.5 | 7.7 | 6.8 |
| B | 1.5 | 0 | 84.7 | 7.4 | 7.7 |

The fact that the CA content was still quite high in the above run was attributed to the very short reaction time. A second run was made under similar conditions. 0.5 grams (0.0025 moles) HEMA, approximately 0.5 grams (0.0067 moles) of $(CH_3)_3SiH$, and 0.0044 grams ($1.6x10^{-5}$ moles) of $RhCl_3.3H_2O$ were charged to a sealed, agitated reactor. The reaction was allowed to proceed at ambient temperature, and samples were taken periodically to be analyzed by gas chromatography. These samples are designated Samples C, D, and E, respectively. The results of these analyses are reported below in Table 9.

Table 9

| Sample | Time,hr | %HEMA | %SKA | %CA | %Other |
|---|---|---|---|---|---|
| C | 0.5 | 16.5 | 64.5 | 8.3 | 10.7 |
| D | 1.5 | 0 | 73.8 | 7.8 | 18.4 |
| E | 5 | 0 | 64.0 | 0 | 36.0 |

The third run was made similarly to the above runs with the exception that tris(triphenylphosphine)-rhodium chloride was used as a catalyst. 1 gram (0.005 moles) HEMA, 0.6 grams (0.008 moles) of $(CH_3)_3SiH$, and 0.015 grams ($1.6x10^{-5}$ moles) of tris(triphenylphosphine)rhodium chloride were charged to a sealed, agitated reactor. The reaction was allowed to proceed at ambient temperature. Again, periodic samples were taken and analyzed. These samples are designated Sample F, G, H, and I, respectively. Table 10 is a summary of these results:

Table 10

(Not Within the Scope of the Instant Invention)

| Sample | Time,hr | %HEMA | %SKA | %CA | %Other |
|---|---|---|---|---|---|
| F | 0.5 | 100 | 0 | 0 | 0 |
| G | 1.5 | 100 | 0 | 0 | 0 |
| H | 4 | 100 | 0 | 0 | 0 |
| I | 24 | 0 | 28.0 | 4.8 | 67.2 |

The above results demonstrate the preparation of a silyl ketene acetal from another ester of methacrylic acid. These results further demonstrate that $RhCl_3.3H_2O$ is significantly more effective than tris-(triphenylphosphine)-rhodium chloride as a catalyst for preparing the desired silyl ketene acetal.

Example 6

81 grams (0.40 moles) of 4-methyl-3,5-dioxyheptyl methacrylate,
$CH_2=C(CH_3)COOCH_2CH_2OCHCH_3OCH_2CH_3$ ,
0.2 grams ($7.6x10^{-4}$ moles) $RhCl_3.3H_2O$, and 90 grams of methylene chloride were charged to an agitated reactor. The reactor and its contents were heated to 45° C. The reactor pressure was maintained at 50 psig (345 kPa gauge) with nitrogen gas.

A total of 38 grams (0.52 moles) of $(CH_3)_3SiH$ was added to the reactor at such a rate as to maintain the 45° C. temperature. The reaction mixture was agitated for approximately 10 hours.

A crude sample was taken and analyzed by gas chromatography. The crude sample was 68 weight percent of the desired silyl ketene acetal (SKA),
$(CH_3)_2C=C[OSi(CH_3)_3][OCH_2CH_2OCHCH_3OCH_2CH_3]$ ,
relative to other byproducts. Negligible amounts of the carbonyl adduct (CA),
$CH_2=C(CH_3)CH[OSi(CH_3)_3]\ [OCH_2CH_2OCHCH_3OCH_2CH_3]$ ,
were noted. The major byproduct was the vinyl adduct (VA),

$$(CH_3)_3SiCH_2CH(CH_3)\overset{O}{\overset{\|}{C}}OCH_2CH_2OCHCH_3OCH_2CH_3.$$

This example demonstrates the preparation of a silyl ketene acetal from a methacrylic acid ester other than methyl methacrylate.

Example 7

191 grams of the crude product of the reaction of 4-methyl-3,5-dioxyheptyl methacrylate and $(CH_3)_3SiH$, prepared in a manner similar to that described in Example 6, was stripped of low-boilers by conventional means and batch-distilled to recover the desired silyl ketene acetal (SKA). The distillation column used for this separation was estimated to have 15 theoretical trays under the conditions of distillation.

A first distillation run was made to concentrate the desired SKA. During this distillation run, system pressure was maintained at 10-15 mm Hg; pot and overhead temperatures rose to 185° and 125°., respectively; reflux rate was held at 10/1 to 20/1. Three overhead cuts were taken and analyzed by gas chromatography. As noted in Example 6, the crude reaction product has negligible carbonyl adduct (CA), with the vinyl adduct being the major byproduct. The results of this run are listed below in Table 11. Analysis of SKA,VA and unused reactants are reported in weight percent (%).

Table 11

| Cut # | Wt,gm | %SKA | %VA | %Reactants |
|---|---|---|---|---|
| Feed | 191 | 54.7 | 17.0 | 12.8 |
| 1 | 30 | 38.4 | 2.0 | 27.9 |
| 2 | 59 | 86.4 | 8.2 | 1.4 |
| 3 | 26 | 72.7 | 22.8 | 0.8 |

Cut #2 and similar material from a previous distillation were combined in a second distillation run. The same 15-tray column was used. System pressure was 5- 10 mm Hg; pot and overheads temperatures rose to 143° and 94° C., respectively; reflux to the column was held at 2/1. Again, overhead cuts were taken and analyzed by gas chromatography. The results of this run are summarized below in Table 12:

Table 12

| Cut # | Wt,gm | %SKA | %VA | %Reactants |
|---|---|---|---|---|
| Feed | 112 | 80.2 | 7.6 | 4.0 |
| 1 | 32 | 63.5 | 4.3 | 15.0 |
| 2 | 41 | 95.0 | 1.5 | 0.6 |
| Pot | 21 | 38.9 | 37.8 | - |

This example demonstrates the separation and purification of another silyl ketene acetal material at a purity of 95% or higher.

Example 8

1 gram of methylmethacrylate or MMA (0.01 moles), 0.9 grams $(CH_3)_2(OCH_3)SiH$ (0.01 moles), and 0.002 grams of $RhCl_3.3H_2O$ ($7.3x10^{-5}$ moles) were charged to a sealed, agitated reactor. The reaction was allowed to take place at ambient temperature. Samples were taken periodically, and these samples were analyzed by gas chromatography. These samples are designated as Samples A, B, and C, respectively.

Table 13 is a summary of crude product analysis as a function of reaction time. Results are reported to point out the silyl ketene acetal (SKA),
$(CH_3)_2C=C(OCH_3)\ [OSi(CH_3)_2(OCH_3)]$,
and carbonyl adduct (CA),
$CH_2=C(CH_3)CH(OCH_3)\ [OSi(CH_3)_2(OCH_3)]$.

Table 13

| Sample | Time,hr | %MMA | %SKA | %CA | %Other |
|---|---|---|---|---|---|
| A | 0 | 100 | 0 | 0 | 0 |
| B | 0.3 | 39.4 | 49.7 | 0.4 | 10.5 |
| C | 18 | 17.7 | 64.2 | 0.4 | 17.7 |

The above results demonstrate the preparation of a silyl ketene acetal from a partially alkoxylated silane and an ester of methacrylic acid.

## Claims

1. A process for the manufacture of silyl ketene acetal material of the general formula selected from the group consisting essentially of

(I) 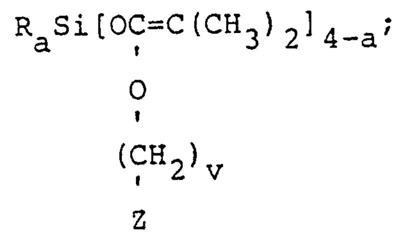

(II) 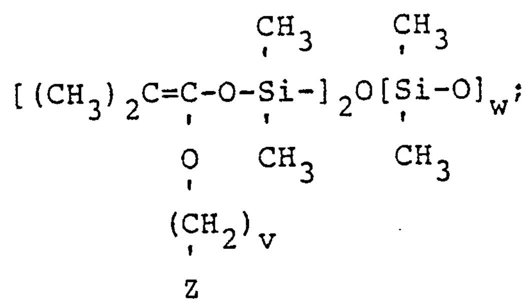

(III) 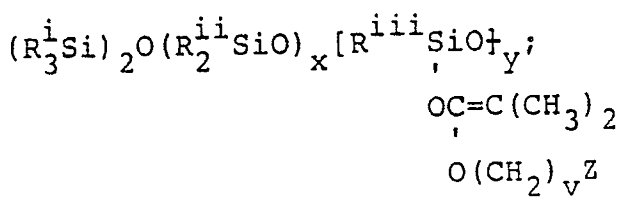

(IV) 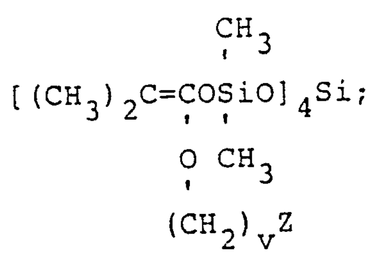 and

wherein R is selected from the group consisting of alkyl radicals containing 1 to 4 carbon atoms, aryl groups, and alkoxy groups containing 1 to 4 carbon atoms;

a has a value of 0, 1, 2, or 3;

v in each case has a value of 0, 1, 2 or 3;

w has a value of 0 to 25;

x has a value of 1 to 100;

y has a value of 1 to 35;

Q is 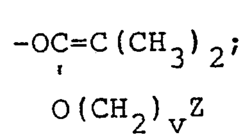

$R^i$, $R^{ii}$, and $R^{iii}$ are each independently selected from alkyl groups containing 1 to 4 carbon atoms and aryl groups; Z in each case is independently selected from the group consisting of

(i) -H,

(ii) -OH,

(iii) $-SiR^{iv}R^{v}R^{vi}$,

wherein $R^{iv}$, $R^{v}$, and $R^{vi}$ are independently selected from the group consisting of alkyl radicals containing 1 to 4 carbon atoms, aryl groups, and alkoxy groups containing 1 to 4 carbon atoms,

(iv) $-OSiR^{iv}R^{v}R^{vi}$,

(v) $-CH(CH_3)_2$,
(vi)

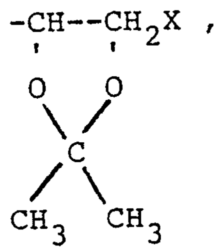

wherein X is hydrogen or $(CH_2)_{0\text{-}5}(CH_3)$,
(vii) $-(CH2)_bOCH(CH_3)O(CH_2)_c\ CH_3$,
wherein b and c each have a value of 1 to 4,
(viii)

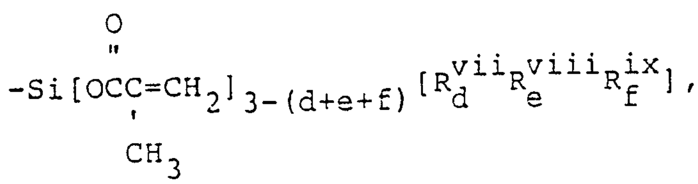

wherein $R^{vii}$, $R^{viii}$, and $R^{ix}$ are independently selected from and have the same definition as $R^{iv}$ , $R^{v}$, and $R^{vi}$; and wherein d, e, and f each have a value of 0 or 1;
(ix) $-NR^{x}R^{xi}$,
wherein $R^{x}$ and $R^{xi}$ are independently selected from and have the same definition as $R^{iv}$, $R^{v}$, and $R^{vi}$,
(x) -Y,
wherein Y is independently selected from a group consisting of $C_{1\text{-}20}$ alkyl, alkenyl, or alkadienyl; $C_{6\text{-}20}$ cycloalkyl, aryl, alkaryl, or aralkyl; any of said groups containing one or more ether oxygen atoms within aliphatic segments thereof; and any of such groups containing one or more functional substituents that are unreactive under polymerizing conditions,
(xi) -N=C=O, said process comprising (A) contacting a vinylic compound, selected from a group consisting essentially of (i) methacrylic acid and (ii) esters of methacrylic acid having the general formula,
$CH_2=C(CH_3)COO(CH_2)_vZ$,
wherein v and Z are as defined above, with hydrogen-containing organosilicon materials having the general formulae,

$$(V) \qquad R_aSiH_{4-a};$$

$$\text{(VI)}\quad (HSi(CH_3)_2-)_2O(Si(CH_3)_2O)_w\,;$$

$$\text{(VII)}\quad (R^{i}_3Si)_2O(R^{ii}_2SiO)_x(R^{iii}HSiO)_y\,; \text{ and}$$

$$\text{(VIII)}\quad [HSi(CH_3)_2O]_4Si\,;$$

wherein, $R^i$, $R^{ii}$, $R^{iii}$, a, w, x, and y have the meanings defined above, in the presence of a rhodium compound containing only inorganic ligands consisting of $RhCl_3 \cdot 3H_2O$, wherein there is present at least a 12% excess of the hydrogen-containing silicon material relative to the vinylic compound on a molar basis; (B) separating and isolating the desired product from the crude product.

2. The process according to Claim 1, wherein the rhodium concentration relative to the vinylic compound is at least 50 ppm on a molar basis.

3. The process according to Claim 1, wherein the reaction temperature is in the range of 30°C to 80°C.

4. The process according to Claim 1, wherein the reaction of the hydrogen-containing silicon material and the vinylic compound takes place at atmospheric pressure or above.

5. The process according to Claim 1, wherein the hydrogen-containing silicon material and the vinylic compound are reacted over a period of at least one hour.

6. The process according to Claim 1, wherein distillation is used to separate and isolate the desired silyl ketene acetal.

7. The process according to Claim 1, wherein the vinylic compound is methylmethacrylate, the hydrogen-containing silicon material is $(CH_3)_3SiH$, the rhodium compound is $RhCl_3.3H_2O$ and the rhodium concentration is 50 to 400 ppm on a molar basis relative to the methylmethacrylate, the molar excess of $(CH_3)_3SiH$ relative to methylmethacrylate is greater than 12%, the reaction temperature is 40° to 75°C., the reaction time between methylmethacrylate and $(CH_3)_3SiH$ is at least two hours, the reaction pressure is at least atmospheric pressure, and the silyl ketene acetal,
$(CH_3)_2C=C(OCH_3)[OSiCH_3)_3]$,
is separated and isolated by distillation.

8. The process according to Claim 9, wherein the $RhCl_3.3H_2O$ concentration relative to the methylmethacrylate is 200 to 300 ppm on a molar basis, the molar excess of $(CH_3)_3SiH$ relative to methylmethacrylate is 12 to 25%, the reaction temperature is 45°C to 55°C., the reaction time between methylmethacrylate and $(CH_3)_3SiH$ is 2 to 8 hours, the reaction pressure is essentially at atmospheric pressure, and the silyl ketene acetal content of the final product is greater than 95 weight percent.

9. The process according to Claim 10, wherein the silyl ketene acetal contains less than 1 weight percent of the carbonyl adduct,
$CH_2=C(CH_3)CH(OCH_3)[OSi(CH_3)_3]$.

10. The process according to Claim 10, wherein the reaction pressure is up to 200 psig.

**11.** The process according to Claim 1, wherein the vinylic compound is 4-methyl-3,5-dioxyheptyl-methacrylate,
$CH_2=C(CH_3)COOCH_2CH_2OCHCH_3OCH_2CH_3$,
the hydrogen-containing silicon material is $(CH_3)_3SiH$, the catalyst is $RhCl_3.3H_2O$ and the catalyst concentration relative to the 4-methyl-3,5-dioxyheptylmethacrylate is 200 to 2000 ppm on a molar basis, the molar excess of $(CH_3)_3SiH$ relative to the 4-methyl-3,5-dioxyheptylmethacrylate is greater than 12%, the reaction temperature is 25° to 55° C., the reaction pressure is at least atmospheric pressure, and the final silyl ketene acetal material,
$(CH_3)_2C=C[OSi(CH_3)_3][OCH_2CH_2OCH(CH_3)OCH_2CH_3]$,
is separated and isolated by distillation.

**12.** The process according to Claim 13, wherein the silyl ketene acetal content of the final product is greater than 95 weight percent.

**13.** The process according to Claim 13, wherein the silyl ketene acetal contains less than 1 weight percent of the carbonyl adduct,
$CH_2=C(CH_3)CH[OSi(CH_3)_3][OCH_2CH_2OCH(CH_3)OCH_2CH_3]$.

**14.** The process according to Claim 1, wherein the vinylic compound is
$CH_2=C(CH_3)COOCH_2CH_2OSi(CH_3)_3$,
the hydrogen-containing silicon material is $(CH_3)_3SiH$, the catalyst is $RhCl_3.3H_2O$ and the catalyst concentration relative to the vinylic compound is 300 to 3000 ppm on a molar basis, the molar excess of $(CH_3)_3SiH$ relative to the vinylic compound is greater than 12%, the reaction temperature is 25 to 55° C., the reaction pressure is at least atmospheric pressure, and the final silyl ketene acetal material,
$(CH_3)_2C=C[OSi(CH_3)_3][OCH_2CH_2OSi(CH_3)_3]$,
is isolated and separated.

**Revendications**

**1.** Un procédé pour la fabrication d'un acétal silylique de cétène de fomule générale choisie dans le groupe formé essentiellement par

(I) 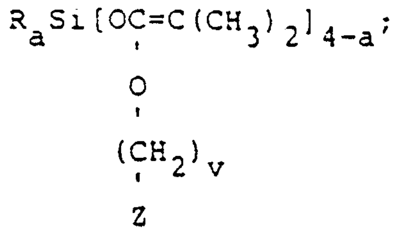

(II) 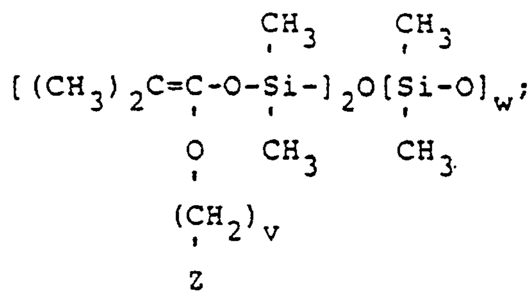

(III) 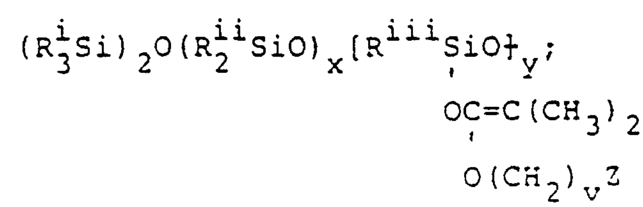

(IV) 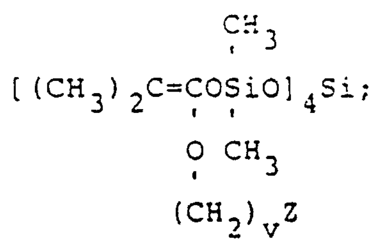 and

où R est choisi dans le groupe formé par les radicaux alkyles contenant 1 à 4 atomes de carbone, les groupes aryles et les groupes alcoxy contenant 1 à 4 atomes de carbone ;

a a une valeur de 0, 1, 2 ou 3 ;

$\overline{Y}$ a, dans chaque cas, une valeur de 0, 1, 2 ou 3 ;

$\overline{w}$ a une valeur de 0 à 25 ;

$\overline{x}$ a une valeur de 0 à 100 ;

$\underline{y}$ a une valeur de 1 à 35 ;

**Q est** 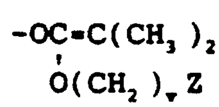 **;**

$R^i$, $R^{ii}$ et $R^{iii}$ sont chacun indépendamment choisis parmi les groupes alkyles contenant 1 à 4 atomes de carbone et les groupes aryles ; Z est, dans chaque cas, indépendamment choisi dans le groupe formé par

(i) -H,

(ii) -OH,

(iii) $-SiR^{iv}R^{v}R^{vi}$,

où $R^{iv}$, $R^{v}$ et $R^{vi}$ sont indépendamment choisis dans le groupe formé par les radicaux alkyles contenant 1 à 4 atomes de carbone, les groupes aryles et les groupes alcoxy contenant 1 à 4 atomes de carbone,

(iv) $-OSiR^{iv}R^{v}R^{vi}$,
(v) $-CH(CH_3)_2$,
(vi)

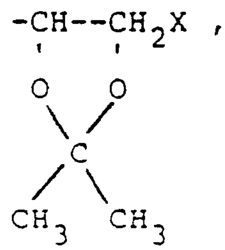

où X est l'hydrogène ou $(CH_2)_{0-5}(CH_3)$,
(vii) $-(CH_2)_bOCH(CH_3)O(CH_2)_cCH_3$,
où b et c ont chacun une valeur de 1 à 4,
(viii)

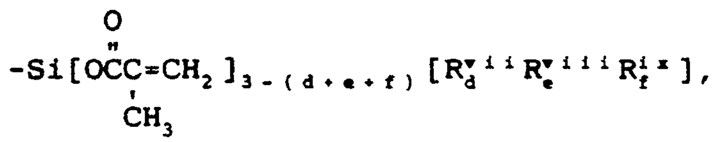

où $R^{vii}$, $R^{viii}$ et $R^{ix}$ sont indépendamment choisis parmi, et ont la même définition que, $R^{iv}$, $R^{v}$ et $R^{vi}$ ; et où d, e et f ont chacun une valeur de 0 ou 1,
(ix) $-NR^{x}R^{xi}$,
où $R^{x}$ et $R^{xi}$ sont indépendamment choisis parmi, et ont la même définition que, $R^{iv}$, $R^{v}$ et $R^{vi}$,
(x) -Y,
où Y est indépendamment choisi dans un groupe formé par les groupes alkyles, alcényles ou alcadiényles en $C_1$-$C_{20}$ ; les groupes cycloalkyles, aryles, alkaryles ou aralkyles en $C_6$-$C_{20}$ ; l'un quelconque desdits groupes contenant un ou plusieurs atomes d'oxygène d'éther inclus dans ses segments aliphatiques ; et l'un quelconque de ces groupes contenant un ou plusieurs substituants fonctionnels qui ne sont pas réactifs dans les conditions de polymérisation,
(xi) -N=C=O, ledit procédé consistant (A) à mettre en contact un composé vinylique, choisi dans un groupe formé essentiellement par (i) l'acide méthacrylique et (ii) les esters d'acide méthacrylique répondant à la formule générale
$CH_2=C(CH_3)COO(CH_2)_vZ$
où v et Z sont tels que définis ci-dessus, avec des composés organosiliciés contenant de l'hydrogène répondant aux formules générales

(V) $R_aSiH_{4-a}$ ;

(VI) 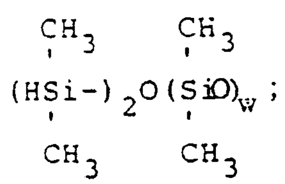 ;

(VII) $(R^{i}_3Si)_2O(R^{ii}_2SiO)_x(R^{iii}HSiO)_y$; et

(VIII) 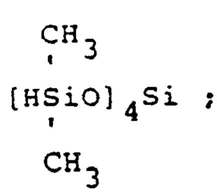 ;

où $R^i$, $R^{ii}$, $R^{iii}$, a, w, x et y ont les définitions données ci-dessus, en présence d'un composé du rhodium ne contenant que des ligands inorganiques consistant en $RhCl_3 .3H_2O$, un excès d'au moins 12 % du composé silicié contenant de l'hydrogène étant présent par rapport au composé vinylique sur base molaire ; (B) à séparer et isoler le produit désiré du produit brut.

**2.** Le procédé selon la revendication 1, dans lequel la concentration de rhodium par rapport au composé vinylique est d'au moins 50 ppm sur base molaire.

**3.** Le procédé selon la revendication 1, dans lequel la température de réaction se situe dans l'intervalle de 30° C à 80° C.

**4.** Le procédé selon la revendication 1, dans lequel la réaction du composé silicié contenant de l'hydrogène et du composé vinylique a lieu à la pression atmosphérique ou à une pression supérieure.

**5.** Le procédé selon la revendication 1, dans lequel le composé silicié contenant de l'hydrogène et le composé vinylique sont mis à réagir durant une période d'au moins une heure.

**6.** Le procédé selon la revendication 1, dans lequel une distillation est employée pour séparer et isoler l'acétal silylique de cétène désiré.

**7.** Le procédé selon la revendication 1, dans lequel le composé vinylique est le méthacrylate de méthyle, le composé silicié contenant de l'hydrogène est $(CH_3)_3SiH$, le composé du rhodium est $RhCl_3 .3H_2O$ et la concentration de rhodium est de 50 à 400 ppm sur base molaire par rapport au méthacrylate de méthyle, l'excès molaire de $(CH_3)_3SiH$ par rapport au méthacrylate de méthyle est supérieur à 12 %, la température de réaction est de 40° à 75° C, la durée de réaction entre le méthacrylate de méthyle et $(CH_3)_3SiH$ est d'au moins deux heures, la pression de réaction est au moins la pression atmosphérique, et l'acétal silylique de cétène
$(CH_3)_2C=C(OCH_3)[OSi(CH_3)_3]$
est séparé et isolé par distillation.

**8.** Le procédé selon la revendication 7, dans lequel la concentration de $RhCl_3 .3H_2O$ par rapport au méthacrylate de méthyle est de 200 à 300 ppm sur base molaire, l'excès molaire de $(CH_3)_3SiH$ par rapport au méthacrylate de méthyle est de 12 à 25 %, la température de réaction est de 45° à 55° C, la durée de réaction entre le méthacrylate de méthyle et $(CH_3)_3SiH$ est de 2 à 8 heures, la pression de réaction est essentiellement égale à la pression atmosphérique, et la teneur en acétal silylique de cétène du produit final est supérieure à 95 pour cent en poids.

**9.** Le procédé selon la revendication 8, dans lequel l'acétal silylique de cétène contient moins de 1 pour cent en poids du produit d'addition au carbonyle
$CH_2 =C(CH_3)CH(OCH_3)[OSi(CH_3)3]$.

**10.** Le procédé selon la revendication 8, dans lequel la pression de réaction est au maximum de 1,38 MPa (200 psi) au manomètre.

**11.** Le procédé selon la revendication l, dans lequel le composé vinylique est le méthacrylate de 4-méthyl-3,5-dioxyheptyle
$CH_2 =C(CH_3)COOCH_2 CH_2 OCHCH_3 OCH_2 CH_3$,
le composé silicié contenant de l'hydrogène est $(CH_3)_3SiH$, le catalyseur est $RhCl_3 .3H_2O$ et la concentration de catalyseur par rapport au méthacrylate de 4-méthyl-3,5-dioxyheptyle est de 200 à 2000 ppm sur base molaire, l'excès molaire de $(CH_3)_3SiH$ par rapport au méthacrylate de 4-méthyl-3,5-dioxyheptyle est supérieur à 12 %, la température de réaction est de 25° à 55° C, la pression de réaction est au moins la pression atmosphérique, et l'acétal silylique de cétène final
$(CH_3)_2C=C[OSi(CH_3)_3][OCH_2CH_2OCH(CH_3)OCH_2CH_3]$
est séparé et isolé par distillation.

**12.** Le procédé selon la revendication 11, dans lequel la teneur en acétal silylique de cétène du produit final est supérieure à 95 pour cent en poids.

13. Le procédé selon la revendication 11, dans lequel l'acétal silylique de cétène contient moins de 1 pour cent en poids du produit d'addition au carbonyle
$CH_2=C(CH_3)CH[OSi(CH_3)_3][OCH_2CH_2OCH(CH_3)OCH_2CH_3]$.

14. Le procédé selon la revendication 1, dans lequel le composé vinylique est
$CH_2=C(CH_3)COOCH_2CH_2OSi(CH_3)_3$,
le composé silicié contenant de l'hydrogéne est $(CH_3)_3SiH$, le catalyseur est $RhCl_3 .3H_2O$ et la concentration de catalyseur par rapport au composé vinylique est de 300 à 3000 ppm sur base molaire, l'excès molaire de $(CH_3)_3SiH$ par rapport au composé vinylique est supérieur à 12 %, la température de réaction est de 25° à 55°C, la pression de réaction est au moins la pression atmosphérique, et l'acétal silylique de cétène final
$(CH_3)_2C=C[OSi(CH_3)_3][OCH_2CH_2OSi(CH_3)_3]$
est isolé et séparé.

## Ansprüche

1. Verfahren zur Herstellung eines Silylketenacetalwerkstoffs der allgemeinen Formel ausgewählt aus der Gruppe bestehend im wesentlichen aus

(I) 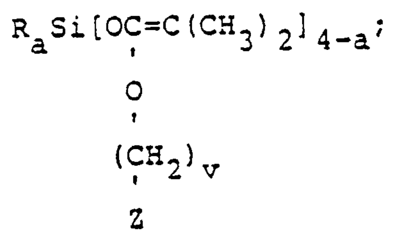

(II) 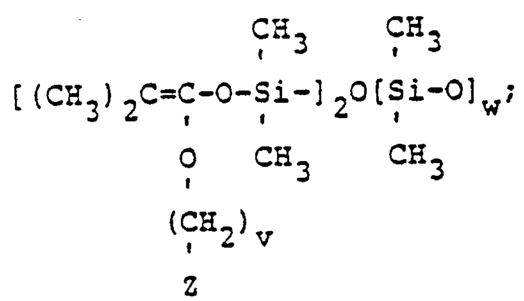

(III) 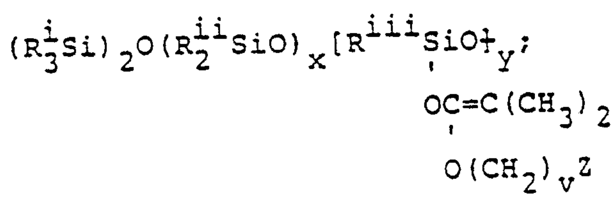

(IV) 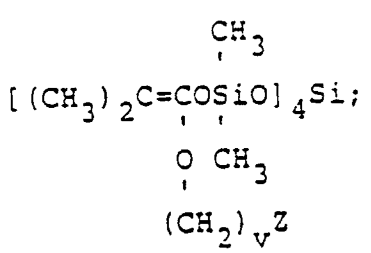 und

wobei R ausgewählt ist aus der Gruppe bestehend aus Alkylgruppen mit 1 bis 4 Kohlenstoffatomen, Arylgruppen und Alkoxygruppen mit 1 bis 4 Kohlenstoffatomen,

a den Wert 0, 1, 2 oder 3 aufweist,

$\bar{v}$ in jedem Falle einen Wert von 0, 1, 2 oder 3 hat,

$\bar{w}$ einen Wert von 0 bis 25 hat,

$\bar{x}$ einen Wert von 0 bis 100 hat,

$\bar{Y}$ einen Wert von 1 bis 35 hat,

Q 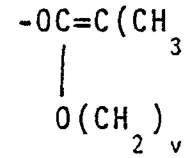 ist,

$R^i$ , $R^{ii}$ und $R^{iii}$ jeweils unabhängig voneinander ausgewählt sind aus Alkylgruppen mit 1 bis 4 Kohlenstoffatomen und Arylgruppen, Z in jedem Falle unabhängig ausgewählt ist aus der Gruppe bestehend aus

(i) -H,

(ii) -0H,

(iii) $-SiR^{iv} R^v R^{vi}$,

wobei $R^{iv}$ , $R^v$ und $R^{vi}$ unabhängig ausgewählt sind aus der Gruppe bestehend aus Alkylgruppen mit 1 bis 4 Kohlenstoffatomen, Arylgruppen und Alkoxygruppen mit 1 bis 4 Kohlenstoffatomen,

(iv) $-0SiR^{iv} R^v R^{vi}$,

(v) $-CH(CH_3)_2$,

(vi)

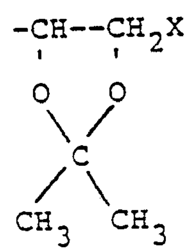 ,

wobei X Wasserstoff oder $(CH_2)_{0-5}$ $(CH_3)$ ist,

(vii) $-(CH_2)b0CH(CH_3)0(CH_2)_cCH_3$, ,

wobei b und c jeweils einen Wert von 1 bis 4 aufweisen,

(viii)

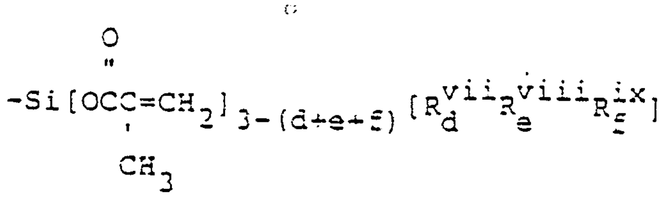 ,

wobei $R^{vii}$ , $R^{viii}$ und $R^{ix}$ jeweils unabhängig ausgewählt sind und die gleiche Definition wie $R^{iv}$ , $R^v$ und $R^{vi}$ haben und wobei d, e und f jeweils einen Wert von 0 oder 1 aufweisen,

(ix) $-NR^x R^{xi}$,

wobei $R^x$ und $R^{xi}$ unabhängig ausgewählt sind und die gleiche Definition wie $R^{iv}$, $R^v$ und $R^{vi}$ besitzen,

(x) -Y,

wobei Y unabhängig ausgewählt ist aus der Gruppe bestehend aus $C_{1-20}$ Alkyl, Alkenyl oder Alkadienyl, $C_{6-20}$ Cycloalkyl , Aryl, Alkaryl oder Aralkyl , wobei jede dieser Gruppen ein oder mehrere Ethersauerstoffatome innerhalb ihrer aliphatischen Segmente enthält; und jede dieser Gruppen einen oder mehrere funktionelle Substituenten enthält, die unter Polymerisationsbedingungen nicht reaktiv sind,

(xi) -N=C=0, wobei bei diesem Verfahren

(A) eine vinylische Verbindung, ausgewählt aus der Gruppe bestehend im wesentlichen aus (i) Methacrylsäure und (ii) Estern der Methacrylsäure der allgemeinen Formel

$CH_2 = C(CH_3)COO(CH_2)_vZ$,

in der v und Z die zuvor angegebene Bedeutung haben, mit einem Wasserstoff enthaltenden Organosiliconwerkstoff der allgemeinen Formeln

(V) $R_aSiH_{4-a}$;

(VI) $(H\underset{CH_3}{\overset{CH_3}{Si}}-)_2O(\underset{CH_3}{\overset{CH_3}{Si}}O)_w$ ;

(VII) $(R^i_3Si)_2O(R^{ii}_2SiO)_x(R^{iii}HSiO)_y$; und

(VIII) $[H\underset{CH_3}{\overset{CH_3}{Si}}O]_4Si$ ;

in denen $R^i$, $R^{ii}$, $R^{iii}$, a, w, x und y die zuvor angegebenen Bedeutungen haben, in Gegenwart einer Rhodiumverbindung, die nur anorganische, aus $RhCl_3 \cdot 3H_2O$ bestehende Liganden enthält, in Berührung gebracht wird, und wobei das Wasserstoff enthaltende Siliconmaterial gegenüber der Vinylverbindung in einem wenigstens 12%igen Überschuß, bezogen auf ein molares Verhältnis, vorhanden ist, (B) das gewünschte Produkt vom Rohprodukt abgetrennt und isoliert wird.

**2.** Verfahren nach Anpruch 1,
**dadurch gekennzeichnet,**
daß die Rhodiumkonzentration, bezogen auf die vinylische Verbindung, auf molarer Basis wenigstens 50 ppm beträgt.

**3.** Verfahren nach Anspruch 1,
**dadurch gekennzeichnet,**
daß die Reaktionstemperatur in einem Bereich von 30 °C bis 80 °C liegt.

**4.** Verfahren nach Anspruch 1,
**dadurch gekennzeichnet,**
daß die Reaktion des Wasserstoff enthaltenden Siliconwerkstoffs und der vinylischen Verbindung bei atmosphärischem Druck oder darüber stattfindet.

**5.** Verfahren nach Anspruch 1,
**dadurch gekennzeichnet,**
daß der Wasserstoff enthaltende Siliconwerkstoff und die vinylische Verbindung über einen Zeitraum von wenigtens eine Stunde reagieren.

**6.** Verfahren nach Anspruch 1,
**dadurch gekennzeichnet,**
daß das gewünschte Silylketenacetal mittels Destillation abgetrennt und isoliert wird.

**7.** Verfahren nach Anspruch 1,
**dadurch gekennzeichnet,**

daß die vinylische Verbindung Methylmethacrylat ist, der Wasserstoff enthaltende Siliconwerkstoff $(CH_3)_3$ SiH ist, die Rhodiumverbindung $RhCl_3$ .3$H_2$ 0 ist und die Rhodiumkonzentration 50 bis 400 ppm auf einer molaren Basis, bezogen auf Methylmethacrylat, ist, der molare Überschuß an $(CH_3)_3$SiH gegenüber Methylmethacrylat größer als 12% ist, die Reaktionstemperatur 40° bis 75° C beträgt, die Reaktionszeit zwischen Methylmethacrylat und $(CH_3)_3$SiH wenigstens zwei Stunden beträgt, der Reaktionsdruck wenigstens atmosphärischer Druck ist und das Silylketenacetal
$(CH_3)_2C = C(0CH_3)[0Si(CH_3)_3]$
durch Destillation abgetrennt und isoliert wird.

**8.** Verfahren nach Anspruch 7,
**dadurch gekennzeichnet,**
daß die $RhCl_3$ .3$H_2$ 0-Konzentration, bezogen auf das Methylmethacrylat, auf molarer Basis 200 bis 300 ppm beträgt, der molare Überschuß an $(CH_3)_3$SiH, bezogen auf Methylmethacrylat, 12 bis 25% beträgt, die Reaktionstemperatur 45° bis 55° C beträgt, die Reaktionszeit zwischen Methylmethacrylat und $(CH_3)_3$SiH 2 bis 8 Stunden beträgt, der Reaktionsdruck im wesentlichen atmosphärischer Druck ist und der Silylketenacetalgehalt im Endprodukt größer als 95 Gew.-% ist.

**9.** Verfahren nach Anspruch 8,
**dadurch gekennzeichnet,**
daß das Silylketenacetal weniger als 1 Gew.-% des Carbonyladdukts
$CH_2 = (CH_3)CH(0CH_3)[0Si(CH_3)_3]$
enthält.

**10.** Verfahren nach Anspruch 8,
**dadurch gekennzeichnet,**
daß der Reaktionsdruck bis zu 200 psig beträgt.

**11.** Verfahren nach Anspruch 1,
**dadurch gekennzeichnet,**
daß die vinylische Verbindung 4-Methyl-3,5-dioxyheptylmethacrylat,
$CH_2 = C(CH_3)C00CH_2 CH_2 0CHCH_3 0CH_2 CH_3$
ist, der Wasserstoff enthaltende Siliconwerkstoff $(CH_3)_3$SiH ist, der Katalysator $RhCl_3$.3$H_2$0 ist und die Katalysatorkonzentration, bezogen auf 4-Methyl-3,5-dioxyheptylmethacrylat, auf molarer Basis 200 bis 2000 ppm beträgt, der molare Überschuß an $(CH_3)_3$SiH, bezogen auf 4-Methyl-3,5-dioxyheptylmethacrylat, größer als 12% ist, die Reaktionstemperatur 25° bis 55° C beträgt, der Reaktionsdruck wenigstens atmosphärischer Druck ist und das Silylketenacetalendprodukt
$(CH_3)_2C = C[0Si(CH_3)_3][0CH_2CH_20CH(CH_3)0CH_2CH_3]$
durch Destillation abgetrennt und isoliert wird.

**12.** Verfahren nach Anspruch 11,
**dadurch gekennzeichnet,**
daß der Silylketenacetalgehalt des Endprodukts größer als 95 Gew.-% ist.

**13.** Verfahren nach Anspruch 11,
**dadurch gekennzeichnet,**
daß das Silylketenacetal weniger als 1 Gew.-% des Carbonyladdukts
$CH_2 = C(CH_3)CH[0Si(CH_3)_3] [OCH_2CH_2OCH(CH_3)OCH_2CH_3]$
enthält.

**14.** Verfahren nach Anspruch 1,
**dadurch gekennzeichnet,**
daß die vinylische Verbindung
$CH_2 = C(CH_3)C00CH_2CH_20Si(CH_3)_3$
ist,
der Wasserstoff enthaltende Siliconwerkstoff $(CH_3)_3$ SiH ist, der Katalysator $RhCl_3$.3$H_2$0 ist und die Katalysatorkonzentration, bezogen auf die vinylische Komponente, bei einer molaren Basis 300 bis 3000 ppm beträgt, der molare Überschuß an $(CH_3)_3$ SiH, bezogen auf die vinylische Verbindung, größer als 12% ist, die Reaktionstemperatur 25 bis 55° C beträgt, der Reaktionsdruck wenigstens atmosphärischer Druck ist und das Silylketenacetalendprodukt
$(CH_3)_2C=C[OSi(CH_3)_3][OCH_2CH_2OSi(CH_3)_3]$
isoliert und aufgetrennt wird.